**Europäisches Patentamt**

**European Patent Office**

**Office européen des brevets**

(19)

(11) Numéro de publication: **0 071 309**
**B1**

(12) ## FASCICULE DE BREVET EUROPEEN

(45) Date de publication du fascicule du brevet:
27.11.85

(51) Int. Cl.⁴: **H 04 B 9/00**

(21) Numéro de dépôt: **82200933.8**

(22) Date de dépôt: **22.07.82**

(54) **Dispositif de couplage d'un émetteur et d'un récepteur de rayonnement à une extrémité d'une fibre optique.**

(30) Priorité: **31.07.81 FR 8114946**

(43) Date de publication de la demande:
**09.02.83 Bulletin 83/6**

(45) Mention de la délivrance du brevet:
**27.11.85 Bulletin 85/48**

(84) Etats contractants désignés:
**DE FR GB IT**

(56) Documents cités:
**FR - A - 2 454 634**

**OPTICS LETTERS, vol.4, no.1, janvier 1979, New York
(US), H. TAKAHASHI et al.: "Optical two-way TV
transmission", pages 24-26
ELECTRICAL COMMUNICATION, vol.55, no.4, 1980,
Heidenheim (DE), W. KOESTER et al.: "Bidirectional
optical link", pages 342-348**

(73) Titulaire: **TELECOMMUNICATIONS
RADIOELECTRIQUES ET TELEPHONIQUES T.R.T.,
88, rue Briliat Savarin, F-75013 Paris (FR)**

(72) Inventeur: **Flocon, Alain, SOCIETE CIVILE
S.P.I.D. 209 rue de l'Université, F-75007 Paris (FR)**

(74) Mandataire: **Chaffraix, Jean et al, Société Civile
S.P.I.D. 209, rue de l'Université, F-75007 Paris (FR)**

ACTORUM AG

## Description

L'invention concerne un dispositif de couplage d'un émetteur et d'un détecteur de rayonnement lumineux à une extrémité d'une fibre optique utilisée pour la transmission bidirectionnelle d'informations avec l'autre extrémité de cette fibre, ce dispositif comportant des premiers moyens pour extraire de la fibre et diriger vers ledit détecteur le rayonnement reçu en provenance de l'autre extrémité de la fibre, et des deuxièmes moyens pour fournir un signal de compensation qui est déduit du signal d'information servant à moduler le premier émetteur et qui est réglé en phase et en amplitude pour compenser la modulation du rayonnement parasite provenant du premier émetteur et atteignant le détecteur.

Grâce à de tels dispositifs de couplage, on peut réaliser des communications en duplex simultané entre deux terminaux réliés par une seule fibre optique. Mais dans ces dispositifs de couplage optique d'un émetteur et d'un récepteur de rayonnement à une fibre optique, on rencontre les mêmes difficultés que dans les dispositifs de couplage électrique d'un émetteur et d'un récepteur de signaux électriques à une ligne de transmission. Une fraction du rayonnement lumineux fourni par l'émetteur peut parvenir sur le détecteur, étant engendré par des fuites de lumière et/ou par des réflexions optiques produites par exemple par des connecteurs insérés sur le trajet optique de transmission. Ce rayonnement lumineux parasite ayant comme origine l'émetteur local se superpose sur le détecteur au rayonnement lumineux porteur d'information utile, provenant de l'émetteur distant et peut réduire dans une grande mesure les distances pour lesquelles les communications en duplex simultané sont possibles.

Pour surmonter ce problème, dans l'article de W. Koester et F. Mohr intitulé «Bidirectional Optical Link» paru aux pages 342 à 348 dans le no 4, vol. 55, 1980, de la revue Electrical Communication, et plus précisément dans l'article de H. Takahashi et autres intitulé «Optical two-way TV Transmission» paru aux pages 24 à 26 dans le no 1, vol. 4, janvier 1979, de la revue Optics Letters New York (US), il a été proposé de faire agir le signal de compensation fourni par le deuxième moyen sur le signal de sortie du détecteur de rayonnement lumineux, par l'intermédiaire d'un circuit de soustraction.

Les performances de ce genre de dispositifs connus sont soumises à la dégradation des caractéristiques des composants utilisés. Ceux-ci se modifient à la fois dans le temps et en fonction de la température. Notamment les caractéristiques de l'émetteur et du détecteur, éléments de nature différente, vont évoluer différemment selon ces deux paramètres de vieillissement et de température, de sorte que la compensation va être rendue de plus en plus inefficace.

La présente invention propose un dispositif de couplage du genre mentionné dans le préambule, qui procure une compensation plus indépendante du vieillissement et de la température que celle apportée par les dispositifs connus. Un tel dispositif est remarquable en ce qu'un deuxième émetteur produisant un rayonnement détectable par le détecteur de rayonnement est disposé de façon à pouvoir exciter également ce détecteur, ce deuxième émetteur étant modulé par ledit signal de compensation.

La description suivante, en regard des dessins annexés, le tout donné à titre d'exemple fera bien comprendre comment l'invention peut être réalisée.

La figure 1 représente le dispositif de couplage de l'invention associé à une extrémité de fibre émettant un rayonnement d'une seule longueur d'onde.

La figure 2 représente ce dispositif associé à une extrémité de fibre optique émettant des rayonnements de longueurs d'onde différentes.

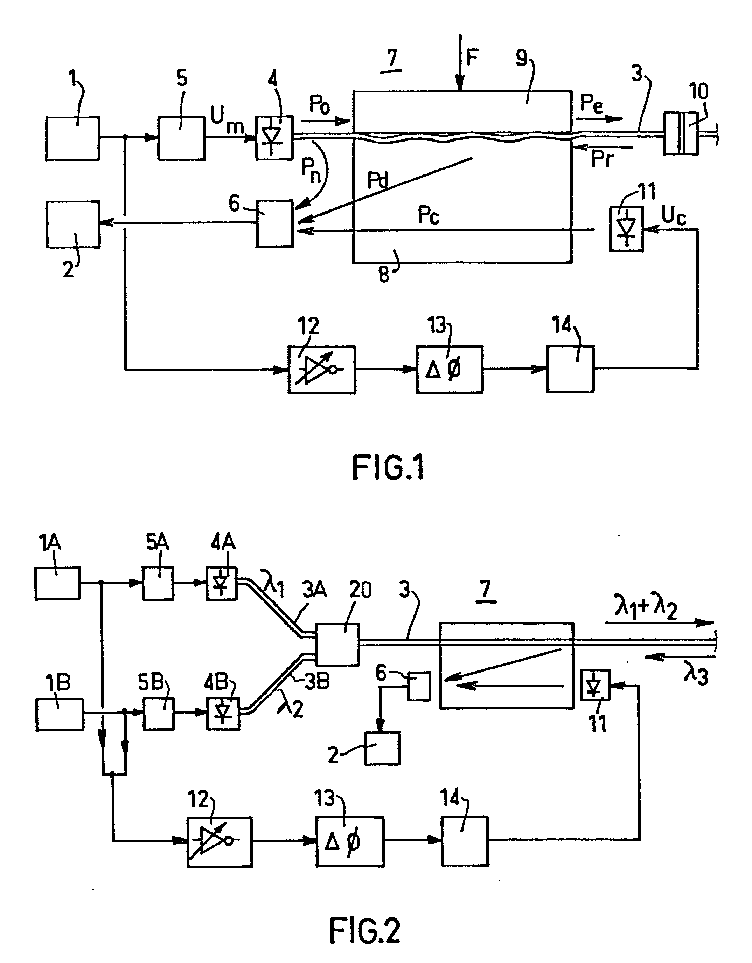

Sur la figure 1 sont représentés une source 1 de signaux d'informations et un récepteur 2 de signaux d'informations, faisant partie d'un terminal local. Un terminal distant non représenté comprend également une source et un récepteur de signaux d'informations. Les signaux d'informations engendrés par les deux terminaux sont à transmettre en duplex simultané par une liaison optique constituée par la fibre optique 3.

Pour engendrer dans la fibre optique 3 un rayonnement modulé par le signal d'information de la source 1, on utilise un émetteur de rayonnement constitué par une diode électroluminescente 4 dont la surface émettrice est en regard de l'extrémité de la fibre 3 et qui est modulée par un signal de modulation $U_m$ déduit du signal d'information de la source 1 par le circuit d'excitation 5. Ce circuit 5 a pour simple rôle d'adapter le signal d'information au signal nécessaire pour exciter la diode. On appelle $P_o$, la partie modulée de la puissance du rayonnement émis par la diode 4 et entrant dans la fibre 3. D'une manière générale, quand par la suite on considère des puissances de rayonnements, il est entendu qu'il s'agit de la partie modulée de ces puissances.

Pour extraire de la fibre optique 3 le rayonnement reçu, modulé par le signal d'information de la source distante et le diriger vers le détecteur de rayonnement 6 connecté à l'entrée du récepteur 2, on utilise un coupleur directif 7 qui est par exemple du type connu décrit dans une communication de C. et W. J. Stewart «Directional Coupler for single multimode optical fibre» au deuxième colloque européen sur les transmissions par fibres optiques, Paris, 27–30 septembre 1976, et publiée par le comité du colloque 11, rue Hamelin, 75783 Paris (Câbles et connexions, deuxième partie, p. 267–268). Selon la représentation simplifiée de la figure, ce coupleur 7 comporte une plaque 8 formée d'un matériau transparent tel que du plexiglass, et dont un bord porte une ondulation constituant un réseau. La plaque 9 soumise à une force F applique la fibre 3 contre le bord ondulé de la plaque 8 de façon à assurer une déformation périodique de la fibre. Le contact optique entre le bord ondulé de la plaque 8 et la fibre permet à une fraction du rayonnement reçu de passer dans la plaque 8 et d'être dirigée en partie, par des dispositions optiques non représentées, vers le détecteur 6. En appelant $P_r$ la puissance de rayonnement reçu et $P_d$ la partie de cette puissance atteignant le détecteur 6, on a par exemple: $P_d = P_r - 17\,dB$.

Mais par suite d'imperfections propres au coupleur optique 7 une fraction de la puissance du rayonnement engendré par la diode électroluminescente 4 peut atteindre également le déteceur 6. Ainsi par exemple, dans le coupleur 7 une partie de la puissance de rayonnement $P_o$ entrant dans la fibre 3 est transmise dans la plaque 8 et il est difficile d'empêcher complètement une fraction de cette puissance transmise d'atteindre le détecteur 6. D'autre part, lorsque le trajet optique de transmission est le siège de discontinuités engendrées par exemple par un connecteur 10, une fraction de la puissance de rayonnement $P_e$ émergeant du coupleur 7, peut être réfléchie par cette discontinuité; comme cette fraction réfléchie se propage dans la fibre 3, dans le même sens que la puissance du rayonnement reçu $P_r$, elle est dirigée de la même manière vers le détecteur 6. Pour ces diverses raisons, au rayonnement utile modulé par l'émetteur distant et atteignant le détecteur 6 avec une puissance $P_d$, se superpose un rayonnement parasite modulé par l'émetteur local 1 et dont la puissance au niveau du détecteur 6 est appelée $P_n$ quelle qu'en soit l'origine. On a par exemple: $P_n = P_o - 27\,dB$. Dans le cas où $P_d = P_r - 17\,dB$, on voit aisément que l'on ne peut effectuer une transmission en duplex que si l'affaiblissement produit dans la liaison optique est inférieur à $10\,dB$, ce qui limite fortement la distance de transmission.

La présente invention fournit un moyen simple et efficace pour compenser le rayonnement parasite de puissance $P_n$ atteignant le détecteur 6, en évitant d'utiliser pour une liaison bidirectionnelle des rayonnements de longueurs d'onde différentes pour les deux sens de transmission.

Conformément à l'invention, un deuxième émetteur de rayonnement, constitué par la diode électroluminescente 11, émet un rayonnement détectable par le détecteur 6. Cette diode 11 est disposée par rapport au détecteur 6, de l'autre côté de la lame transparente 8, de façon que le rayonnement émis puise atteindre le détecteur 6. La diode électroluminescente 11 est modulée par un signal de compensation $U_c$ qui est déduit du signal d'information fourni par la source 1 au moyen du montage en cascade d'un circuit amplificateur inverseur 12 à gain réglable, d'un circuit de déphasage réglable 13 et d'un circuit d'excitation 14 jouant le même rôle que le circuit d'excitation 5. Etant donné que les signaux $U_m$ et $U_c$ modulant les diodes 4 et 11 ont la même origine, à savoir le signal d'information de la source 1, il est clair qu'en réglant convenablement le gain de l'amplificateur inverseur 12 et le déphasage produit par le circuit 13, on peut obtenir que la modulation du rayonnement dit de compensation fourni par la diode 11 et atteignant le détecteur 6 ait une amplitude égale et une phase opposée à la modulation du rayonnement parasite atteignant également le détecteur 6. La puissance $P_n$ du rayonnement parasite est alors exactement compensée au niveau du détecteur 6 par la puissance $P_c$ du rayonnement de compensation et l'effet de ce rayonnement parasite est annulé. On peut aisément procéder aux réglages corrects du gain et du déphasage produits par les circuits 12 et 13 en vérifiant que, lorsque seule la source locale 1 fournit un signal d'information, le récepteur local 2 ne reçoit aucun signal.

L'invention s'applique bien entendu à n'importe quel type de coupleur optique muni de 4 accès, comme le coupleur 7 représenté sur la figure 1.

L'utilisation de ces dispositifs de couplages dans un système de transmission bidirectionnelle par une fibre optique permet d'augmenter dans des porportions importantes la distance de transmission , d'utiliser la même longueur d'onde du rayonnement pour les deux sens de transmission et finalement d'employer des équipements d'extrémité indentiques.

Il est bien entendu possible également d'utiliser le dispositif de couplage de l'invention dans un système de transmission utilisant des longueurs d'onde de rayonnement différentes pour les deux sens de transmission, pourvu que le détecteur du coupleur puisse détecter toutes ces longueurs d'onde. Il est possible aussi d'utiliser le même circuit de compensation et le même émetteur de rayonnement de compensation pour compenser un rayonnement parasite provenant de plusieurs émetteurs de rayonnement utile à des longueurs d'onde différentes. Ces possibilités sont exploitées dans l'équipement d'extrémité montré sur la figure 2.

Sur cette figure, les éléments identiques à ceux de la figure 1 sont référencés de la même manière. On a représenté deux sources de signaux d'information 1A et 1B qui, par l'intermédiaire des circuits d'excitation 5A et 5B, modulent les deux diodes électroluminescentes 4A et 4B émettant respectivement des rayonnements de longueur d'onde $\lambda_1$ et $\lambda_2$. Ces rayonnements sont émis respectivement dans les deux branches de fibre optique 3A et 3B, qui sont reliées au dispositif de multiplexage optique 20. La sortie de ce dernier est reliée à la fibre optique 3 dans laquelle sont émis l'un et/ou l'autre des deux rayonnements de longueur d'onde $\lambda_1$ et $\lambda_2$ en direction de l'autre extrémité non représentée de la fibre. On suppose que, à cette autre extrémité, est émis un rayonnement de longueur d'onde différente $\lambda_3$, qui parvient sur l'extrémité de la fibre représentée sur la figure. Pour extraire de la fibre 3 ce rayonnement de longueur d'onde $\lambda_3$, on utilise un coupleur 7 représenté de façon simplifiée et muni d'un détecteur de rayonnement 6 couplé à un récepteur 2. Ce coupleur 7 est muni, conformément à l'invention, d'une diode électroluminescente 11 modulée par un signal de compensation, déduit du signal fourni par la source 1A et/ou la source 1B au moyen des circuits en cascade 12, 13, 14. Avec un détecteur 6 sensible aux rayonnements de longueur d'one $\lambda_1$, $\lambda_2$ et $\lambda_3$, on obtient une compensation du rayonnement parasite de longueur d'onde $\lambda_1$ et/ou $\lambda_2$, parvenant sur ce détecteur. L'équipement montré à la figure 2 pourrait bien entendu comporter plus de deux émetteurs de rayonnement à des longueurs d'onde différentes.

**Revendications**

1. Dispositif de couplage d'un émetteur (4) et d'un détecteur de rayonnement lumineux (6) à une extrémité d'une fibre optique (3) utilisée pour la transmission bidirectionnelle d'informations avec l'autre extrémité de cette fibre, ce dispositif comportant des premiers moyens (7) pour extraire de la fibre et diriger vers ledit détecteur le rayonnement reçu en provenance de l'autre extrémité de la fibre, et des deuxièmes moyens (1–12–13–14) pour fournir un signal de compensation qui est déduit du signal d'information servant à moduler le premier émetteur et qui est réglé en phase et en amplitude pour compenser la modulation du rayonnement parasite provenant du premier émetteur et atteignant le détecteur, caractérisé en ce qu'un deuxième émetteur (11) produisant un rayonnement détectable par le détecteur de rayonnement est disposé de façon à pouvoir exciter également ce détecteur, ce deuxième émetteur étant modulé par ledit signal de compensation.

2. Système de transmission bidirectionnelle d'information par une fibre optique (3) couplée à chaque extrémité à un émetteur (4) et à un récepteur de rayonnement (6) par un dispositif de couplage selon la revendication 1, caractérisé en ce que les émetteurs de rayonnement couplés aux deux extrémités de la fibre optique émettent des rayonnements de même longueur d'onde.

3. Dispositif de couplage selon la revendication 1, caractérisé en ce que le premier émetteur (4A, 4B) est agencé pour émettre des rayonnements de longueurs d'onde différentes ($\lambda_1$, $\lambda_2$) modulés respectivement par des signaux d'information, caractérisé en ce que le deuxième moyen est prévu pour fournir un signal de compensation déduit desdits signaux d'information.

**Patentansprüche**

1. Einrichtung zur Kopplung eines Senders (4) und eines optischen Strahlungsdetektors (6) mit einem Ende einer optischen Faser (3), die zur Zweiwegübertragung von Information zu dem anderen Ende dieser Faser verwendet wird, wobei diese Einrichtung erste Mittel (7) enthält, um der Faser die von dem anderen Ende der Faser empfangene Strahlung zu entnehmen und dem Detektor zuzuführen, sowie zweite Mittel (1–12–13–14) zum Liefern eines Ausgleichssignals, das von dem Informationssignal abgeleitet ist und das zum Modulieren des ersten Senders dient und das phasen- sowie amplitudengeregelt wird zum Ausgleich der parasitären Strahlungsmodulation, die von dem ersten Sender herrührt und den Detektor erreicht, dadurch gekennzeichnet, dass ein zweiter Sender (11), der eine Strahlung erzeugt, der von dem Strahlungsdetektor detektierbar ist, vorgesehen ist, um diesen Detektor anzuregen, wobei der zweite Sender von dem genannten Ausgleichssignal moduliert wird.

2. System für Zweiwegübertragung von Information mittels einer optischen Faser (3), die an jedem Ende mit einem Sender (4) und mit einem Strahlungsempfänger (6) mittels einer Kopplungseinrichung nach Anspruch 1 verbunden ist, dadurch gekennzeichnet, dass die Strahlungssender, die mit den zwei Enden der optischen Faser verbunden sind, Strahlung mit derselben Wellenlänge ausstrahlen.

3. Kopplungseinrichtung nach Anspruch 1, dadurch gekennzeichnet, dass der erste Sender (4A, 4B) zum Ausstrahlen von Strahlungen mit unterschiedlichen Wellenlängen ($\lambda_1$, $\lambda_2$) vorgesehen ist, die mit den Informationssignalen moduliert sind, dadurch gekennzeichnet, dass das zweite Mittel zum Liefern eines zusammengestellten Signals, das aus den genannten Informationssignalen abgeleitet ist, vorgesehen ist.

**Claims**

1. A device for coupling a radiation source (4) and a radiation detector (6) to one end of an optical fiber (3) employed for two-way transmission of information to the other end of this fiber, this device comprising first means (7) for extracting from the fiber and directing towards the said detector the radiation received from the other end of the fiber, and second means (1–12–13–14) for producing a compensation signal which is derived from the information signal which has for its object to modulate the first radiation source and whose phase and amplitude are controlled to compensate for the modulation of the parasitic radiation coming from the first radiation source and reaching the detector, characterized in that a second radiation source (11) producing a radiation which is detectable by the radiation detector is arranged in such a way that it can likewise excite this detector, the second radiation source being modulated by said compensation signal.

2. A system for the two-way transmission of information via an optical fiber (3) coupled at each end of a radiation source (4) and to a radiation receiver (6) by means of a coupling device as claimed in Claim 1, characterized in that the radiation sources coupled to the two ends of the optical fiber transmit radiations having the same wavelengths.

3. A coupling device as claimed in Claim 1, characterized in that the first source (4A, 4B) is arranged for transmitting radiations of different wavelenghts ($\lambda_1$, $\lambda_2$), which are respectively modulated by the information signal, characterized in that the second means is provided for producing a compensation signal derived from the said information signals.

FIG.1

FIG.2